# EUROPÄISCHE PATENTSCHRIFT

(11) **EP 1 291 399 B1**
(45) Veröffentlichungstag und Bekanntmachung des Hinweises auf die Patenterteilung: **21.12.2005**
(21) Anmeldenummer: 02020224.8
(22) Anmeldetag: 10.09.2002
(51) Int. Cl.: C09D 13/00, A61K 7/032, A61K 7/48

(54) **Puderstift mit einem porösen Minengrundkörper**
Powderstick with a porous lead base body
Baton à poudre avec un corps de base de mine poreux

(30) Priorität: 11.09.2001 DE 10144532
(43) Veröffentlichungstag der Anmeldung: 12.03.2003
(73) Patentinhaber: Faber- Castell AG, 90546 Stein (DE)
(72) Erfinder: Appel, Reiner, 90522 Oberasbach (DE); Lugert, Gerhard, Dr., 90431 Nürnberg (DE)
(74) Vertreter: Mörtel & Höfner

(56) Entgegenhaltungen:
- EP-A- 1 258 235
- WO-A-01/12712
- U. ZORLL (HRSG.): "Römpp Lexikon Lacke und Druckfarben" 1998 , GEORG THIEME VERLAG , STUTTGART - NEW YORK XP002263861 * Seite 599 - Seite 600 *
- CANTERBERY PEPE R ET AL: "International Cosmetic Ingredient Dictionary and Handbook" , INTERNATIONAL COSMETIC INGREDIENT DICTIONARY AND HANDBOOK, WASHINGTON, DC: CTFA, US, VOL. VOL. 2 OF 4, PAGE(S) 1283 XP002210595 ISBN: 1-882621-29-8 * das ganze Dokument *

## Beschreibung

Die Erfindung betrifft eine Farbmine oder Farbkreide für kosmetikzwecke oder für eine Applikation auf Zeichenuntergründen wie Papier o. dgl. Es sind Farbminen bekannt, die Cellulosederivate als Bindemittel besitzen (Ullmann's Encyclopedia of Industrial Chemistry, VCH Verlagsgesellschaft mbH, D-6940 Weinheim, 1987, p.39). Diese Minen werden hergestellt, indem Bindemittel, Füllstoffe, Pigmente und ggf. Additive mit Wasser vermischt und die so erhaltene Masse zu Strängen ausgepresst bzw. extrudiert wird. Anschließend werden die Stränge auf Minenlänge zugeschnitten und bei ca. 100 °C getrocknet. Die so erhaltenen Minengrundkörper werden schließlich in ein Fett- oder Wachsbad getaucht. Die bekannten Minen besitzen eine relativ feste, kompakte Struktur und weisen nur in geringem Umfang Hohlräume auf, sodass nur zwischen 10 und 25 Gewichtsprozent der Mine Wachs oder Fett aufnehmen können. Nachteilig ist weiterhin, dass die in den Minen vorhandenen Hohlräume nicht mit einer wässrigen Phase gefüllt werden können. Das Auftrags- bzw. Abgabeverhalten der bekannten Minen wird in erster Linie durch die Öl/Wachs/Fett-Mischung bestimmt. Bei kosmetischen Anwendungen werden derart ölige oder fettige Abstriche oft als unangenehm empfunden. Unangenehm dabei ist weiterhin, dass zur Erzeugen der Abstriche die Minen mit relativ großem Druck über die Haut geführt werden müssen. Bei der Applikation auf Papier erzeugen die Minen oft einen schmierigen oder klebrigen und unabhängig von der jeweiligen Anwendung farbschwachen Abstrich. Die bekannten Minen weisen außerdem nur eine geringe Temperaturstabilität auf.

Davon ausgehend ist es Aufgabe der Erfindung, Minen mit einer alternativen Zusammensetzung vorzuschlagen, die insbesonderehinsichtlich ihres Abstrichverhaltens verbessert sind.

Diese Aufgabe wird nach Anspruch 1 mit einer einen porösen Minengrundkörper aufweisenden Mine gelöst, welcher als formgebende Hauptbestandteile einen Füllstoff und einen nichtionischen Assoziativverdicker enthält. Es wurde überraschenderweise festgestellt, dass mit Verdickern der genannten Art Minen mit porösen Minengrundkörpern hergestellt werden können, die gegenüber herkömmlichen Minen ein vergrößertes Hohlraumvolumen aufweisen und die hinsichtlich ihrer Konsistenz und ihres Abstrichverhaltens mit Puderminen vergleichbar sind. Die genannten Verdicker bestehen im Wesentlichen aus Polymeren mit einem hydrophilen Rückgrat in das hydrophobe Bereiche bzw. Molekülgruppen eingelagert sind. Die hydrophoben Bereiche bzw. Gruppen sind in der Lage, sich sowohl gegenseitig aneinander als auch an hydrophobe Gruppen anderer Moleküle oder an hydrophobe Füllstoffteilchen anzulagern. D.h. sie entfalten eine verdickende bzw. verfestigende Wirkung, indem sie ein hydrophobes Netzwerk bilden. Andrerseits wirken die hydrophilen Bereiche mit Wasser und hydrophilen Zusatzstoffen, vor allen Dingen mit hydrophilen Füllstoffpartikeln zusammen. Die Konsistenz der späteren Mine lässt sich somit je nach Art der gewählten Zusatzstoffe in weiten Bereichen variieren.

Die vorgeschlagenen Verdicker weisen überraschenderweise zum einen Bindemitteleigenschaften auf, zum anderen können damit auf einfache Weise poröse Minengrundkörper hergestellt werden, die ein etwa doppelt so großes Hohlraumvolumen aufweisen wie die bekannten Minen mit Bindemitteln auf Cellulosederivatbasis. Besonders hervorzuheben ist dabei, dass die Minenmasse beim Trocknen nicht schrumpft. Bei herkömmlichen Minen mit Cellulosederivaten als Bindemittel ist dagegen ein deutliches Schrumpfen vorhanden, das durch entsprechende Überdimensionierungen der extrudierten Minenstränge kompensiert werden muss.

Bevorzugt wird ein Assoziativverdicker verwendet, der ein Copolymer aus wenigstens einem Polyoxyethylenglykol-Polymer (PEG) mit 5 bis 300 CH₂-CH₂-O-Monomeren und n-Alkoxy-alkylglycouril-Monomeren enthält. Besonders bevorzugt wird ein Copolymer mit Tetramethoxy-methylglycouril-Monomeren verwendet. Die besten Ergebnisse werden mit einem Copolymer aus PEG-180 (q.v.), Dodoxynol-5 (q.v.), PEG-25 tristyrylphenol und Tetramethoxymethylglycouril-Monomeren erzielt. Dieser Stoff wird nach der INCI-Nomenklatur mit "Polyether-1" bezeichnet. Die Angabe q.v. bedeutet "quantity varies".

Bei der Herstellung eines Minengrundkörpers werden als Hauptbestandteile der Assoziativ-Verdicker und Füllstoffe mit Wasser vermischt und die Mischung zu Strängen ausgepresst und abgelängt. Neben der Tatsache, dass die Minen im feuchten Zustand gegenüber den herkömmlichen Minen eine deutlich erhöhte Flexibilität und Bruchfestigkeit aufweisen, was die Handhabung beim Fertigungsprozess erleichtert, ist besonders vorteilhaft, dass die nach dem Extrudieren und Ablängen erhaltenen Minengrundkörper nach dem Trocken eine völlig andere, nämlich eine poröse, puderartige Konsistenz und ein dementsprechende weiches Abstrichverhalten aufweisen.

Vorteilhaft ist weiterhin, dass die noch feuchten Minengrundkörper auf drei unterschiedlichen Wegen zu Produkten mit unterschiedlichen Eigenschaften weiterverarbeitbar sind: Wenn Minen mit puderartiger Konsistenz gewünscht sind, werden die Minen einer Trocknung unterzogen, um das anfangs zugesetzte Wasser wieder zu entfernen. Es entstehen poröse Minengrundkörper mit einem großen Hohlraumvolumen und einem von Puderminen her bekannten Abstrichverhalten. Als zweite Variante werden die Hohlräume, deren Anteil am Gesamtvolumen bis zu 45 Vol.% betragt, mit einer beliebigen flüssigen oder durch Erhitzen verflüssigten Phase, etwa mit Wachsen, Fetten, Ölen oder sonstigen, beispielsweise hautpflegende Eigenschaften aufweisenden Substanzen getränkt werden. Es können auf diese Weise Minen mit einem breit gefächerten Eigenschaftsspektrum insbesondere auch hinsichtlich ihres Abstrichverhaltens erhalten werden. Schließlich können die ausgepressten Minenstücke ohne weitere Behandlung als stark wasserhaltige, einen bei der Applikation durch Wasserverdunstung hervorgerufenen Kühleffekt aufweisende Kosmetikminen verwendet werden. Bei diesen Minen wie auch im Falle der wasserfreien Minen ist besonders vorteilhaft, dass ein Wasserentzug nicht zu einer Schrumpfung führt. So können die wasserhaltigen Minen mit einer Ummantelung, beispielsweise mit einer Holzummantelung versehen werden, ohne dass der feste Sitz der Minen in der Ummantelung verloren geht, wenn ein Teil des Wassers verdunstet oder von der Ummantelung aufgesaugt wird. Vorteilhaft ist weiterhin, dass sich die oben erwähnte Ausgangsmischung gut auspressen bzw. extrudieren lässt.
Ein weiterer Vorteil der vorgeschlagenen Minen ist, dass der zu ihrer Herstellung verwendete Assoziativ-Verdicker neben einer extrem starken verdickenden Wirkung auch Eigenschaften eines Emulgators aufweist. Er ist in der Lage, eine große Menge an Füllstoffen zu binden, was auf eine Wechselwirkung zwischen den Partikeln des Füllstoffes und den Verdickermolekülen, insbesondere mit deren hydrophoben Gruppen zurückzuführen ist. Dabei kann die verdickende bzw. den Minengrundkörper verfestigende Wirkung und damit die Konsistenz der späteren Mine durch eine gezielte Auswahl von Füllstoffen oder auch von anderen Zusatzstoffen gesteuert werden.

Die vor allem während des Herstellungsprozesses wichtigen Parameter Flexibilität und Bruchfestigkeit lassen sich im Bedarfsfalle durch einen geringen Zusatz von organischen Bindemitteln wie z. B. Sodium-alginate erhöhen, ohne dass die weiche Konsistenz, die gute Applizierbarkeit und die Spitzbarkeit der Minen beeinträchtigt werden. Als pulverhaltige Füllstoffe eigenen sich vor allem Polymethylmethacrylate, Mica und Silica. Natürlich sind auch andere Füllstoffe denkbar. Als Hilfstoffe zum Auspressen der Ausgangsmasse und als Haftvermittler sind Netzmittel wie z B. Disodium-laureth-sulfosuccinate (INCI-Name) geeignet. Zur Verbesserung der Gleitfähigkeit während der Applikation und zur Verbesserung der Haftfestigkeit des Puders sowie zur Verringerung von Rißbildungen der Minen beim Trocknen können in geringen Mengen (< 10 %) Wachse, Fette, Öle (z. B. Castoroil) oder Emulgatoren zugesetzt werden. Hier sind vor allem Hydrogenated Palm Kernel Glycerides/ Hydrogenated Palm Glycerides zu nennen. Der Zusatz von pflegenden Substanzen wie Lanolin, Aloe Vera, Tocopherol u. a. sowie Konservierungsmittel oder Aromen ist ebenfalls bei Bedarf möglich. Grundsätzlich können sämtliche Zusatz- und Hilfsstoffe, sofern sie nicht verfahrensbedingt von Beginn an vorhanden sein müssen, nach dem Trocken in die Hohlräume der Minengrundkörper eingebracht werden, indem dieser in eine entsprechende Flüssigkeit eingetaucht wird. Im Falle von bei Applikationstemperatur (etwa 0 bis 45 °C) festen Stoffen, beispielsweise Fetten, werden diese durch Erwärmen verflüssigt. Bei wasserhaltigen Zubereitungen ist es zwar grundsätzlich möglich, einen getrockneten Minengrundkörper mit Wasser zu tränken. Zweckmäßiger ist es jedoch, bei der Vermischung der Ausgangsstoffe gleich die in der fertigen Mine gewünschte Wassermenge zuzugeben, wobei nach dem Extrudieren und Ablängen bereits fertige Minen vorliegen.

Zusammenfassend werden noch einige Vorteile der erfindungsgemäßen Minen genannt:

Für kosmetische Anwendungen können weich applizierbare Minen hergestellt werden, die sich von herkömmlichen gegossenen oder extrudierten Kosmetikminen sowohl durch verbesserte Abgabeeigenschaften als auch durch ein erleichtertes, weniger Ausschuss lieferndes Herstellverfahren unterscheiden.

Die Minen sind im Gegensatz zu herkömmlichen Wachsminen noch bei Temperaturen von 50 °C und darüber stabil bzw. gebrauchsfähig.

Je nach Anteil an Wachsen, Fetten oder Ölen sind die erfindungsgemäßen Minen mehr oder weniger wasserfest. Durch Beimengung eines Emulgators werden die Minen wassserlöslich bzw. aquarellierbar.

Zusätzlich kann sowohl bei Wasser enthaltenden als auch bei Öl/Wachs/Fett/Emulgator enthaltenden Minen oder Kreiden durch Zusatz von pflegenden Substanzen, z.B. Aloe Vera, Lanolin, Lavendelöl oder Aromen bzw. Parfüm oder durch Vitamine z.B. Tocopherol, oder durch flüchtige Substanzen wie z. B. Silikonöl eine oder mehrere Zusatzfunktionen erzielt werden. Auch der Zusatz von W/O- oder O/W-Emulsionen oder Kunststoffdispersionen ist denkbar. Die zuvor genannten Substanzen können auch ganz oder teilweise in Form von Mikrokapseln enthalten sein.

### Ausführungsbeispiele:

Zum einem ist es möglich, die vorhanden Hohlräume mit einem hohen Anteil (20 Gew.-% bis 45 Gew.-%) an Wasser oder mit wässrigen Formulierungen auszufüllen, welche auch pflegende Stoffe oder auch Aromen, beispielsweise in mikroverkapselter Form, enthalten können. Die Abstriche dieser Minen weisen einen Kühleffekt auf, der durch Wasserverdunstung bei der Applikation auf der Haut hervorgerufen wird.

Zum anderen können die vorhandenen Minenhohlräume mit Ölen, Wachsen, Fettsäurederivaten, Fetten oder Emulgatoren auch in Mischungen ausgefüllt werden. Der Gesamtanteil von derartigen Zusätzen kann bei diesen Minen bevorzugt 20 - 45 % betragen. Als Öle sind Rhizinusöl, Palmöl und Paraffinöl, als wachsartige Substanzen Mikrokristalinwachse, hydriertes Rhizinusöl, Bienenwachs, Carnaubawachs, Beerenwachs, Candelillawachs, Paraffinwachs oder hydrogenated Palm Kernel Glycerides, hydrogenated Palm Glycerides, Polyethylenwachse oder Japanwachs exemplarisch zu nennen. Beispiele für Fettsäurederivate sind Stearinsäure, Palmitinsäure, Ölsäure oder Fettalkohole oder Ester von Fettalkoholen wie z. B. Cetyl-octanolate.

### Minen bzw. Kreiden, deren Hohlraume wässrige Zubereitungen enthalten

Füllstoffe, Pigmente, Verdickungsmittel sowie evtl. weitere Zusätze werden in einen Kneter oder Schnellmischer homogen vermischt. In die vorliegende Mischung wird Wasser oder eine wässrige Zubereitung eingearbeitet. Im Anschluss daran wird die Masse entsprechend in Minenstücke ausgepresst und im feuchten Zustand unmittelbar in Kunststoffröhrchen bzw. - halter eingesetzt oder mit einer Holzummantelung versehen, evtl. auch mit einem Kunststoffschrumpfschlauch umhüllt.

### Beispiel 1

Rote Farbkreide mit erhöhten Wassergehalt; Durchmesser 10 mm.

| | |
|---|---|
| Polyether-1 (Pure Thix® TX-1442, SÜD-CHEMIE) | 1,8 % |
| Mica | 17,0 % |
| Polymethylmethacrylat | 34,0 % |
| Disodium-laureth-sulfosuccinate (CAS 68 815-56-5) | 3,0 % |
| Hydrogenated Palm Kernel Glycerides, Hydrogenated Palm Glycerides (CAS 67 701-26-2) | 2,4 % |
| P. R. 112 CI 12 370 | 6,0 % |
| Wasser | 35,5 % |
| Konservierungsmittel | 0,3 % |

Polyether-1 wird von der Firma SÜD-CHEMIE AG unter dem Handelsnamen Pure Thix® TX-1442 erhältlich.

Die Abstriche der Kreide sind aquarellierbar.

### Beispiel 2

Schwarze Farbkreide mit erhöhten Wassergehalt und einer Kunststoffdispersion, Durchmesser 12 mm.

| | |
|---|---|
| Polyether-1 | 1,8 % |
| Mica | 12,0 % |
| Polymethylmethacrylat | 24,0 % |
| Disodium-laureth-sulfosuccinate (CAS 68 815-56-5) | 1,2 % |
| Eisenoxydschwarz CI 77 499 | 18,0 % |
| Wässrige Polyurethan-Dispersion, 60%Festkörper | 10,0 % |
| Wasser | 32,5 % |
| Konservierungsmittel | 0,5 % |

Eine wässrige Polyurethan-Dispersion der verwendeten Art ist unter der Typenbezeichnung U 210 von der Alberdingk Boley GmbH, DE oder der Alberdingk Boley Inc., USA erhältlich.

Die angetrockneten Abstriche der Kreide besitzen eine gegenüber Beispiel 2 reduzierte Aquarellierbarkeit.

### Beispiel 3

Schwarze Mine mit erhöhten Wassergehalt für kosmetische Anwendungen, z.B. Eyeliner, Durchmesser 4,0 mm.

| | |
|---|---|
| Polyether-1 | 1,8 % |
| Natriumalginate (E 401) | 0,2 % |
| Mica 97 - 99 %, Silica 1 - 3 % (CAS 12 001-26-2, 7 631-86-9) | 12,0 % |
| Polymethylmethacrylat | 24,0 % |
| Disodium-laureth-sulfosuccinate (CAS 68 815-56-5) | 3,0 % |
| Hydrogenated Palm Kernel Glycerides, Hydrogenated Palm Glycerides (CAS 67 701-26-2) | 1,6 % |
| Eisenoxydschwarz CI 77 499 | 18,0 % |
| Wasser | 40,0 % |
| Konservierungsmittel | 0,4 % |

### Beispiel 4

Gelbe Mine für kosmetische Anwendungen, mit Wassergehalt und Mikrokapseldispersion mit Aroma, Durchmesser 8 mm.

| | |
|---|---|
| Polyether-1 | 1,8 % |
| Methylcellulose | 0,3 % |
| Mica 97 - 99 %, Silica 1 - 3 % (CAS 12 001-26-2, 7 631-86-9) | 12,0 % |
| Talkum | 20,0 % |
| Magnesiummyristat | 4,0 % |
| Disodium Laureth Sulfosuccinate (CAS 68 815-56-5) | 3,0 % |
| Hydrogenated Palm Kernel Glycerides, Hydrogenated Palm Glycerides (CAS 67 701-26-2) | 1,6 % |
| Titandioxyd CI 77 891 | 10,0 % |
| Eisenoxydgelb CI 77 492 - 77 491 | 8,0 % |
| Speziel Aroma MRD "Blue Line" (Bayer AG), Polyurethan verkapseltes Parfüm. 50%ige wässrige Dispersion mit Kapselgröße 6 micron | 30,0 % |
| Wasser | 8,8 % |
| Konservierungsmittel | 0,5 % |

Die pulverförmigen Rohmaterialien werden zusammen mit dem Wasser im Schnellmischer mit hoher Drehzahl vermischt. Die mikroverkapselte Parfüm-dispersion wird unter leichtem Rühren untergerührt. Beim Applizieren auf der menschlichen Haut und beim Verteilen der kosmetischen Masse mit dem Finger wird das Parfüm freigesetzt.

### Minen bzw. Kreiden, deren Hohlraume wachs- oder ölartige Zubereitungen enthalten

Füllstoffe, Pigmente, Verdickungsmittel sowie evtl. weitere Zusätze werden in einen Kneter oder Schnellmischer homogen vermischt. In die vorliegende Mischung wird Wasser oder eine wässrige Zubereitung eingearbeitet. Im Anschluss daran wird die Masse entsprechend ausgepresst, in Minen bzw. Kreidenstücke geschnitten und bei milder Temperatur (20 - 70 °C) getrocknet. Daraufhin in einer Öl und/oder Wachs und/oder Fett und/oder Emulgatorenmischung getaucht (Imprägnation), wobei diese Mischung bei Raumtemperatur flüssig sein kann oder durch erhöhte Temperatur (in der Regel max. 130 °C) verflüssigt wird. Die Minen werden für holzgefaßte oder kunststoffgefaßte Produkte verwendet oder können bei Durchmessern > 4mm auch als Kreiden in den Verkehr gebracht werden.

### Beispiel 5

Rote Farbkreide mit einer wasserlöslichen, wachsartigen Substanz (Emulgator), Durchmesser 8 mm.

| Rohmaterial/Minengrundkörper: | |
|---|---|
| Polyether-1 | 2,0 % |
| Mica | 17,0 % |
| Polymethylmethacrylat | 34,0 % |
| Disodium-laureth-sulfosuccinate (CAS 68 815-56-5) Hydrogenated Palm Kernel Glycerides, Hydro- | 3,0 % |
| genated Palm Glycerides (CAS 67 701-26-2) | 2,7 % |
| P. R. 112 CI 12 370 | 6,0 % |

| Imprägnation: | |
|---|---|
| Crodet S100 Veg. [CAS 9004-99-3]nach Eintauchen der Kreide beträgt die Emulgatorenaufnahme ca. | 35 % |

Crodet S100 Veg, ein PEG-100 Stearat, ist ein Produkt der Croda Chemicals Ltd., UK. Ltd.)

Die Abstriche der Kreide besitzen eine Aquarellierbarkeit.

### Beispiel 6

Blaue Farbmine für kosmetische Anwendungen (z.B. Eyeshadow) im Durchmesser 6 mm mit einer wasserfesten, wachsartigen Mischung

| Rohmaterial/Minengrundkörper: | |
|---|---|
| Polyether-1 | 1,8 % |
| Sodium-alginate (E 401) | 0,1 % |
| Mica 97 - 99 %, Silica | 1 - 3 % |
| (CAS 12 001-26-2, 7 631-86-9) | 12,0 % |
| Polymethylmethacrylat | 24,0 % |
| Disodium-laureth-sulfosuccinate (CAS 68 815-56-5) | 3,0 % |
| Hydrogenated Palm Kernel Glycerides, Hydrogenated Palm Glycerides (CAS 67 701-26-2) | 1,6 % |
| Pigment | 18,0 % |
| Konservierungsmittel | 0,4 % |
| Imprägnation : ca. | 40 % |
| | |

| Zusammensetzung der Imprägnation: | |
|---|---|
| Cetyl-octanoate | 40 % |
| 100 Sucroseacetat Isobutyrat [CAS 000126-13-6] | 40 % |
| Candelillawachs | 7 % |
| Carnaubawachs | 7 % |
| Bienenwachs | 6 % |

Sämtliche Prozentangaben sind Gewichtsprozent, sofern nichts anderes angegeben ist.

## Patentansprüche

1. Farbmine oder Farbkreide mit einem porösen Minengrundkörper, der als Hauptbestandteile einen Füllstoff und einen nicht-ionischen Assoziativverdicker enthält, wobei die Hohlräume des porösen Minengrundkörpers mit einer festen oder flüssigen Phase gefüllt sind, der Anteil der die Hohlräume füllenden festen oder flüssigen Phase 20 Gew.-% bis 45 Gew.-% beträgt und als feste oder flüssige Phase wenigstens ein Bestandteil aus der Gruppe Wasser, wässrige Zubereitungen, Öle, Wachse, Fette, Fettsäurederivate und Emulgatoren enthalten ist.

2. Farbmine oder Farbkreide nach Anspruch 1,
**dadurch gekennzeichnet,**
**dass** der Assoiativverdicker ein Copolymer aus wenigstens einem Polyoxyethylenglykol-Polymer (PEG) mit 5 bis 300 CH₂-CH₂-O-Monomeren und n-Alkoxy-alkylglycouril-Monomeren enthält.

3. Farbmine oder Farbkreide nach Anspruch 1 oder 2,
**dadurch gekennzeichnet,**
**dass** das Copolymer Tetramethoxy-methylglycouril-Monomere enthält.

4. Farbmine oder Farbkreide nach Anspruch 3,
**dadurch gekennzeichnet,**
**dass** sich das Copolymer aus PEG-180 (q.v.), Dodoxynol-5 (q.v.), PEG-25-tristyrylphenol und Tetramethoxymethylglycouril Monomeren zusammensetzt.

5. Farbmine oder Farbkreide nach einem der Ansprüche 1 bis 3,
**dadurch gekennzeichnet,**
**dass** ein organisches Bindemittel enthalten ist.

6. Farbmine oder Farbkreide nach Anspruch 5,
**dadurch gekennzeichnet,**
**dass** als Bindemittel Natriumalginat enthalten ist.

7. Farbmine oder Farbkreide nach einem der Ansprüche 1 - 6
**dadurch gekennzeichnet,**
**dass** als Füllstoff Polymethylmethacrylat-Partikel enthalten sind.

8. Farbmine oder Farbkreide nach einem der Ansprüche 1 - 6
**dadurch gekennzeichnet,**
**dass** als Füllstoff Mica enthalten ist.

9. Farbmine oder Farbkreide nach einem der Ansprüche 1 bis 8,
**dadurch gekennzeichnet,**
**dass** ein Netzmittel enthalten ist.

10. Farbmine oder Farbkreide nach Anspruch 9,
**dadurch gekennzeichnet,**
**dass** als Netzmittel Disodium-laureth-sulfosuccinate enthalten ist.

11. Farbmine oder Farbkreide nach einem der Ansprüche 1 bis 10,
**dadurch gekennzeichnet,**
**dass** wenigstens ein Bestandteil aus der Gruppe Öle, Wachse, Fette, Fettsäurederivate und wasserlösliche Emulgatoren enthalten sind.

12. Farbmine oder Farbkreide nach einem der Ansprüche 1 bis 11,
**dadurch gekennzeichnet,**
**dass** als Fettsäurederivat Hydrogenated Palm Kernel Glycerides, Hydrogenated Palm Glycerides enthalten ist.

13. Farbmine oder Farbkreide nach einem der Ansprüche 1 bis 12,
**dadurch gekennzeichnet,**
**dass** als Farbmittel Pigmente enthalten sind.

14. Farbmine oder Farbkreide nach einem der Ansprüche 1 bis 13,
**gekennzeichnet durch**
folgende Zusammensetzung:
| Minengrundkörper: | |
|---|---|
| Copolymer bzw. Assoziativ-Verdicker | 0,1 - 3 Gew.-% |
| Organisches Bindemittel | 0 - 5 Gew.-% |
| Füllstoffe | 24 - 60 Gew.-% |
| Netzmittel | 0 - 6 Gew.-% |
| Wachs und/oder Fett und/oder Fettsäure-derivat und/oder Emulgator | 0 - 6 Gew.-% |
| Farbmittel | 0 - 30 Gew.-% |
| Additive (z.B. Aromen, Parfüm, Konservierungsmittel, pflegende Substanzen, (optional auch mikroverkapselt)) | 0 - 15 Gew.-% |
| Feste/flüssige Phase in dem Hohlräumen: | |
|---|---|
| Wasser oder wässrige Zubereitung oder Öle und/oder Wachse und/oder Fette und/oder Emulgatoren | 20 - 45 Gew.-% |

15. Farbmine oder Farbkreide nach einem der Ansprüche 1 bis 14,
**dadurch gekennzeichnet,**
**dass** Additive wie Aromen, Parfüm oder pflegende Substanzen in mikroverkapselter Form enthalten sind.

16. Farbmine oder Farbkreide nach einem der Ansprüche 1 bis 15,
**dadurch gekennzeichnet,**
**dass** flüchtige Silikonöle enthalten sind.

## Claims

1. Coloured lead or coloured chalk with a porous lead base body which comprises, as main constituents, a filler and a non-ionic associative thickener, where the cavities of the porous lead base body are filled with a solid or liquid phase, the fraction of the solid or liquid phase filling the cavities is 20% by weight to 45% by weight and the solid or liquid phase present is at least one constituent from the group consisting of water, aqueous preparations, oils, waxes, fats, fatty acid derivatives and emulsifiers.

2. Coloured lead or coloured chalk according to Claim 1,
**characterized in that**
the associative thickener comprises a copolymer of at least one polyoxyethylene glycol polymer (PEG) with 5 to 300 CH₂-CH₂-O monomers and n-alkoxyalkylglycoluril monomers.

3. Coloured lead or coloured chalk according to Claim 1 or 2,
**characterized in that**
the copolymer comprises tetramethoxymethylglycoluril monomers.

4. Coloured lead or coloured chalk according to Claim 3,
**characterized in that**
the copolymer is composed of PEG-180 (q.v.), dodoxynol-5 (q.v.), PEG-25 tristyrylphenol and tetramethoxymethylglycoluril monomers.

5. Coloured lead or coloured chalk according to one of Claims 1 to 3,
**characterized in that**
an organic binder is present.

6. Coloured lead or coloured chalk according to Claim 5,
**characterized in that**
the binder present is sodium alginate.

7. Coloured lead or coloured chalk according to one of Claims 1-6,
**characterized in that**
the filler present is polymethyl methacrylate particles.

8. Coloured lead or coloured chalk according to one of Claims 1-6,
**characterized in that**
the filler present is mica.

9. Coloured lead or coloured chalk according to one of Claims 1 to 8,
**characterized in that**
a wetting agent is present.

10. Coloured lead or coloured chalk according to Claim 9,
**characterized in that**
the wetting agent present is disodium laureth sulphosuccinate.

11. Coloured lead or coloured chalk according to one of Claims 1 to 10,
**characterized in that**
at least one constituent from the group consisting of oils, waxes, fats, fatty acid derivatives and watersoluble emulsifiers is present.

12. Coloured lead or coloured chalk according to one of Claims 1 to 11,
**characterized in that**
the fatty acid derivative present is hydrogenated palm kernel glycerides, hydrogenated palm glycerides.

13. Coloured lead or coloured chalk according to one of Claims 1 to 12,
**characterized in that**
the pigments are present as colorants.

14. Coloured lead or coloured chalk according to one of Claims 1 to 13,
**characterized by**
the following composition:
| Lead base body: | |
|---|---|
| Copolymer and/or associative thickener | 0.1-3% by wt. |
| Organic binder | 0-5% by wt. |
| Fillers | 24-60% by wt. |
| Wetting agents | 0-6% by wt. |
| Wax and/or fat and/or fatty acid derivative and/or emulsifier | 0-6% by wt. |
| Colorant | 0-30% by wt. |
| Additives (e.g. aromas, perfume, preservatives, care substances, (optionally also microencapsulated)) | 0-15% by wt. |
| Solid/liquid phase in the cavities: | |
|---|---|
| Water or aqueous preparation or oils and/or waxes and/or fats and/or emulsifiers | 20-45% by wt. |

15. Coloured lead or coloured chalk according to one of Claims 1 to 14,
**characterized in that**
additives such as aromas, perfumes or care substances in microencapsulated form are present.

16. Coloured lead or coloured chalk according to one of Claims 1 to 15,
**characterized in that**
volatile silicone oils are present.

## Revendications

1. Mine de couleur ou craie de couleur, comprenant un corps de base de mine qui renferme comme constituants principaux une charge et un épaississant associatif non ionique, les cavités du corps de base de mine poreux étant emplies d'une phase solide ou liquide, la proportion de la phase solide ou liquide emplissant les cavités représentant de 20 % en poids à 45 % en poids et il est contenu comme phase solide ou liquide au moins un constituant choisi dans le groupe de l'eau, des préparations aqueuses, des huiles, des cires, des graisses, des dérivés d'acides gras et des émulsionnants.

2. Mine de couleur ou craie de couleur suivant la revendication 1,
**caractérisée**
**en ce que** l'épaississant associatif contient un copolymère d'au moins un polymère de polyoxyéthylèneglycol (PEG) ayant de 5 à 300 monomères de CH₂-CH₂-O et des monomères de n-alcoxyalcoylglycourile.

3. Mine de couleur ou craie de couleur suivant la revendication 1 ou 2,
**caractérisée**
**en ce que** le polymère contient des monomères de tétraméthoxyméthylglycourile.

4. Mine de couleur ou craie de couleur suivant la revendication 3,
**caractérisée**
**en ce que** le copolymère se compose de monomères de PEG-180 (q.v.), de dodoxynol-5 (q.v.), de PEG-25 de tristyrylphénol et de tétraméthoxyméthylglycourile.

5. Mine de couleur ou craie de couleur suivant l'une des revendications 1 à 3,
**caractérisée**
**en ce qu'**elle contient un liant organique.

6. Mine de couleur ou craie de couleur suivant la revendication 5,
**caractérisée**
**en ce qu'**elle contient de l'alginate de sodium comme liant organique.

7. Mine de couleur ou craie de couleur suivant l'une des revendications 1 à 6,
**caractérisée**
**en ce qu'**elle contient des particules de poly(méthacrylate de méthyle) comme charge.

8. Mine de couleur ou craie de couleur suivant l'une des revendications 1 à 6,
**caractérisée**
**en ce qu'**elle contient du mica comme charge.

9. Mine de couleur ou craie de couleur suivant l'une des revendications 1 à 6,
**caractérisée**
**en ce qu'**elle contient un agent mouillant.

10. Mine de couleur ou craie de couleur suivant la revendication 9,
**caractérisée**
**en ce qu'**elle contient du lauryl-sulfosuccinate disodique comme agent mouillant.

11. Mine de couleur ou craie de couleur suivant l'une des revendications 1 à 10,
**caractérisée**
**en ce qu'**elle contient au moins un constituant choisi dans le groupe des huiles, des cires, des graisses, des dérivés d'acides gras et des émulsionnants solubles dans l'eau.

12. Mine de couleur ou craie de couleur suivant l'une des revendications 1 à 11,
**caractérisée**
**en ce qu'**elle contient comme dérivés d'acides gras des glycérides d'huile de palme hydrogénés.

13. Mine de couleur ou craie de couleur suivant l'une des revendications 1 à 12,
**caractérisée**
**en ce qu'**elle contient des pigments comme colorant.

14. Mine de couleur ou craie de couleur suivant l'une des revendications 1 à 13,
**caractérisée**
**par** la composition suivante :
| Corps de base de mine : | |
|---|---|
| Copolymère ou épaississant associatif | 0,1 à 3 % en poids |
| Liant organique | 0 à 5 % en poids |
| Charge | 24 à 60 % en poids |
| Agent mouillant | 0 à 6 % en poids |
| Cire et/ou graisse et/ou dérivé d'acides gras et/ou émulsionnant | 0 à 6 % en poids |
| Colorant | 0 à 30 % en poids |
| Additif (par exemple arômes, parfums, conservateurs, substances d'entretien (éventuellement aussi micro-encapsulées)) | 0 à 15 % en poids |
| Phase solide/liquide dans les cavités | |
|---|---|
| Eau ou préparations aqueuses ou huiles et/ou cires et/ou graisses et/ou émulsionnants | 20 à 45 % en poids |

15. Mine de couleur ou craie de couleur suivant l'une des revendications 1 à 14,
**caractérisée**
**en ce qu'**elle contient des additifs comme des arômes, des parfums ou des substances d'entretien sous forme micro-encapsulée.

16. Mine de couleur ou craie de couleur suivant l'une des revendications 1 à 15,
**caractérisée**
**en ce qu'**elle contient des huiles de silicone volatiles.
